# EUROPEAN PATENT APPLICATION

(11) **EP 2 942 717 A1**
(43) Date of publication of application: **11.11.2015**
(21) Application number: 15164348.3
(22) Date of filing: 20.04.2015
(51) Int. Cl.: G06F 17/30

(54) **APPARATUS AND METHOD FOR PROVIDING AUGMENTED REALITY FOR MAINTENANCE APPLICATIONS**

(30) Priority: 06.05.2014 US 201414270903
(71) Applicant: Honeywell International Inc., Morristown, NJ 07962-2245 (US)
(72) Inventor: Conner, Kevin J, Morristown, NJ New Jersey 07962-2245 (US); Mathan, Santosh, Morristown, NJ New Jersey 07962-2245 (US)
(74) Representative: Houghton, Mark Phillip

(57) **Abstract**

A method for providing maintenance instructions to a user is provided. The method obtains a set of data, comprising maintenance instructions, macrolocation data, and object recognition characteristics associated with a target apparatus; guides the user to a macrolocation and a microlocation of the target apparatus, based on the obtained set of data; and provides the maintenance instructions associated with the target apparatus, when the user has reached the macrolocation and the microlocation.

## Description

### TECHNICAL FIELD

Embodiments of the subject matter described herein relate generally to augmented reality applications. More particularly, embodiments of the subject matter relate to an apparatus to provide augmented reality for maintenance applications.

### BACKGROUND

To complete maintenance tasks, maintenance personnel require immediate access to reference materials, documentation, checklists, and the like. Often, repairs and other maintenance activities must be performed in small areas, having limited space for storage of such materials. In addition, many maintenance or repair tasks require the use of both hands, eliminating the capability of one person to simultaneously perform the task and carry all required materials. Generally, two personnel are needed to perform a maintenance task, so that one person may complete the task while a second person carries the required materials to do so.

Accordingly, it is desirable to provide an apparatus to provide the support of a second person. In addition, it is desirable that the apparatus is wearable by a user, to limit the amount of material the user is required to carry, and to allow the user hands-free access to the object requiring maintenance. Furthermore, other desirable features and characteristics will become apparent from the subsequent detailed description and the appended claims, taken in conjunction with the accompanying drawings and the foregoing technical field and background.

### BRIEF SUMMARY

Some embodiments provide a method for providing maintenance instructions to a user. The method obtains a set of data, comprising maintenance instructions, macrolocation data, and object recognition characteristics associated with a target apparatus; guides the user to a macrolocation and a microlocation of the target apparatus, based on the obtained set of data; and provides the maintenance instructions associated with the target apparatus, when the user has reached the macrolocation and the microlocation.

Some embodiments provide a system for providing maintenance instructions to a user. The system includes a data acquisition module, configured to download and store maintenance data associated with a target apparatus; a visual field analysis module, configured to scan and recognize at least one aspect of a visual field of a user, and to generate travel instructions to the user based on the recognized at least one aspect; and a user interface module, configured to receive a user request for the maintenance data associated with the target apparatus, and to present the maintenance data and the travel instructions to the user, based on the received user request.

Some embodiments provide a wearable device for providing user instruction. The wearable device includes a memory element, configured to store maintenance data for a target apparatus, wherein the maintenance data comprises at least a plurality of repair instructions and a macrolocation of the target apparatus; a voice recognition (VR) interface, configured to receive voice instructions from a user and to retrieve the maintenance data for presentation to the user in response to the received voice instructions; a visual input device, configured to scan a visual field of the user, to determine a macrolocation of the user; a processor, configured to determine traveling directions for the user, based on the macrolocation of the user and the macrolocation of the target apparatus; and a presentation apparatus, configured to present the maintenance data and the traveling directions to the user.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a schematic block diagram representation of a maintenance assistance system, according to some embodiments;
FIG. 2 is a diagram representation of a maintenance assistance system, according to some embodiments;
FIG. 3 is a flow chart that illustrates an embodiment of a process for providing maintenance instructions to a user;
FIG. 4 is a flow chart that illustrates an embodiment of a process for guiding a user to a macrolocation of a target apparatus; and
FIG. 5 is a flow chart that illustrates an embodiment of a process for guiding a user to a microlocation of a target apparatus.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to apparatus and methods used to provide hands-free, maintenance assistance features for use during performance of maintenance activities. In certain embodiments, a wearable maintenance assistance device is worn by a user that is tasked with repair and/or maintenance activities associated with a target apparatus. The maintenance assistance device is configured to scan and analyze a visual field to determine a location of the user, and to provide travel instructions based on the location data. The maintenance assistance device is further configured to provide positioning or movement instructions for the user to locate the target apparatus in the visual field. The maintenance assistance device receives voice input from the user, in which the user may request repair instructions or clarifying details, and in which the user may relay a task status for recording. In response to user requests and/or upon arrival of the user at the appropriate location/position in the visual field, the maintenance assistance device provides the requested information.

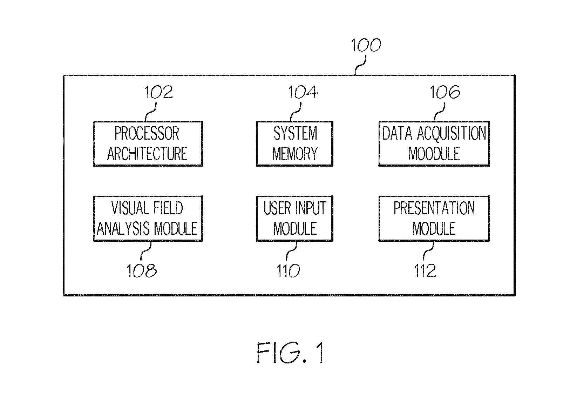

FIG. 1 is a schematic block diagram representation of a maintenance assistance system 100, according to some embodiments. The maintenance assistance system 100 may be implemented using any desired platform, but will generally be implemented using a portable computing device. For example, the maintenance assistance system 100 could be realized as any of the following, without limitation: a laptop computer, a tablet computer, a smartphone, a specialized piece of diagnostic equipment, and embedded processor-based device or system, or any other device that includes a processor architecture 102.

The maintenance assistance system 100 may include, without limitation: a processor architecture 102; a system memory 104; a data acquisition module 106; a visual field analysis module 108; a user input module 110; and a presentation module 112. In practice, an embodiment of the maintenance assistance system 100 may include additional or alternative elements and components, as desired for the particular application. These elements and features of the maintenance assistance system 100 may be operatively associated with one another, coupled to one another, or otherwise configured to cooperate with one another as needed to support the desired functionality - in particular, providing maintenance assistance features, as described herein. For ease of illustration and clarity, the various physical, electrical, and logical couplings and interconnections for these elements and features are not depicted in FIG. 1. Moreover, it should be appreciated that embodiments of the maintenance assistance system 100 will include other elements, modules, and features that cooperate to support the desired functionality. For simplicity, FIG. 1 only depicts certain elements that relate to the maintenance assistance features, described in more detail below.

The processor architecture 102 may be implemented using any suitable processing system, such as one or more processors (e.g., multiple chips or multiple cores on a single chip), controllers, microprocessors, microcontrollers, processing cores and/or other computing resources spread across any number of distributed or integrated systems, including any number of "cloud-based" or other virtual systems.

The processor architecture 102 is in communication with system memory 104. The system memory 104 represents any non-transitory short or long term storage or other computer-readable media capable of storing programming instructions for execution on the processor architecture 102, including any sort of random access memory (RAM), read only memory (ROM), flash memory, magnetic or optical mass storage, and/or the like. It should be noted that the system memory 104 represents one suitable implementation of such computer-readable media, and alternatively or additionally, the processor architecture 102 could receive and cooperate with external computer-readable media that is realized as a portable or mobile component or application platform, e.g., a portable hard drive, a USB flash drive, an optical disc, or the like.

The data acquisition module 106 is suitably configured to obtain maintenance data for a target apparatus. In certain embodiments, the data acquisition module 106 initiates a download of maintenance data upon synchronization of a communication connection between the maintenance assistance system 100 and a maintenance "base station" or server, including a maintenance database or other form of stored maintenance data for one or more potential target apparatuses.

A target apparatus may be any device, tool, mechanism, machine, or piece of equipment for which maintenance and/or repair may be required. Maintenance activities may include particular upkeep or repair tasks that require performance for a target apparatus to become or remain operational. For example, maintenance tasks for an automobile engine may include changing the engine oil or rotating the tires. Maintenance tasks for an unspecified target apparatus may include tightening a screw, securing a panel, replacing a wire, and/or any other task associated with maintaining functionality of the target apparatus.

Maintenance data may include repair instructions, clarifying detail associated with each repair instruction, location data associated with a target apparatus (including map data), and additional data specific to the target apparatus (including schematics/diagrams, etc.). Repair instructions may include step-by-step directions for fixing or maintaining a target apparatus, such as that presented in a technical manual. Clarifying detail includes optionally-presented additional sub-steps or emphasis on where a particular part or mechanism is located in the visual field, to enable the user to more clearly understand a repair instruction. For example, a repair instruction "remove panel" may be associated with clarifying detail, such as "first, remove bolt X", "next, remove bolt Y", and "finally, extract the panel from groove A using an upward motion". For more experienced maintenance personnel, the clarifying detail may be unnecessary and therefore would not be requested. However, the data acquisition module 106 is configured to initiate a download of all applicable maintenance data, so that clarifying details are available upon request from the user. Acquired maintenance data may further include additional data specific to a target apparatus, to include schematics, diagrams, special instructions, or any applicable reference material.

The visual field analysis module 108 is configured to initiate scanning of a visual field of a user, and to detect and recognize features of the visual field. A visual field is an image captured using a visual input device, such as a camera. Hardware capabilities of the visual input device control the boundaries of the visual field. Generally, the visual input device is worn by a user, and captures an image from the direction the visual input device is pointed. Recognized features may include passive tags, wearable position indicators, and/or other designated, system-recognizable objects that indicate macrolocation data and microlocation data.

A macrolocation is a triangulated location in a geographic area. Common examples of macrolocation data include global positioning system (GPS) coordinates or system-specific designators assigned to a particular building, hallway, or other location within the maintenance site. One example of a macrolocation indicator is a passive tag. A passive tag is a visual marker that is uniquely identifiable by the maintenance assistance system 100. The visual field analysis module 108 is configured to recognize passive tags located in the visual field and to identify macrolocation data associated with each passive tag. Passive tags are strategically placed in various geographic locations within a particular maintenance site. A maintenance site may include any predefined geographic area. A maintenance site may be permanently located (e.g., a building or a group of buildings), or a maintenance site may include an impermanent site (e.g., an aircraft, a car, truck, train, or other vehicle). A passive tag may be implemented using a visually distinguishable label or marker, which is scanned and recognized by the maintenance assistance system 100. Macrolocation data, or data identifying a particular geographic area of the maintenance site, is associated with a particular passive tag. When a particular passive tag is recognized, the visual field analysis module 108 is configured to perform a lookup of the passive tag in system memory 104, and to use the information in system memory 104 to determine a current location of the user.

Microlocation data includes a detected position in a visual field, as it relates to other recognized objects in the visual field. The visual field analysis module 108 is configured to recognize a wearable position indicator located in the visual field and to identify microlocation data associated with its position in the visual field. A wearable position indicator is worn by a user, and in certain embodiments, is worn on a user's hand. Exemplary embodiments of a wearable position indicator may include a glove, a ring, an armband, a bracelet, or the like.

In some embodiments, the recognized features include one or more objects recognized in the visual field, which may provide macrolocation and/or microlocation data. Objects in a visual field may be predefined and associated with selected macrolocation data, wherein the recognized object behaves in the same way as a passive tag, identifying a triangulated location of the user when scanned. An object in a visual field may also be recognized and analyzed to determine microlocation data associated with its current position. The maintenance assistance system 100 is configured to utilize image processing and object-recognition techniques commonly known in the art, to scan and recognize predefined objects in a visual field of a user, and to identify associated macrolocation data (e.g., a GPS position of a recognized object) and/or microlocation data (e.g., a defined position in the visual field of the user).

The user input module 110 is configured to receive input requests and information from a user of the maintenance assistance system 100. User input may include a request to provide an instruction, a request to provide clarifying data associated with an instruction, a request for the presentation of reference material, or an instruction to designate a task as complete. User input may also include a command to capture an image for documentation purposes; to request another task assignment, such as a subsequent task or to return to a previous task; or to receive maintenance data acquired during performance of the current task, such as a reading, measurement, or other form of status data. User input including a reading or measurement may be used by the maintenance assistance system 100 to keep a record of tasks performed and/or to provide a user with adaptive instructions that may change based on user input. In certain embodiments, the user input module 110 receives and processes user input compatible with voice recognition (VR) technology. In some embodiments, the user input module 110 receives and processes user input in the form of a button-push, toggle-switch, touchscreen selection, or the like.

The presentation module 112 is configured to provide maintenance data, obtained by the data acquisition module 106, to the user in a visual and/or auditory format. Instructions are presented to a user to enable the user to perform tasks to fix, or to simply maintain, operational capabilities of a target apparatus. Such instructions may be presented in a step-by-step fashion, in which each individual instruction is provided to a user and separated from the previous and subsequent instructions by an interval of time. The intervals of time between instructions allow a user an opportunity to request clarifying detail or additional reference material from the maintenance assistance system 100. In certain embodiments, time intervals may be predefined, wherein the presentation module 112 provides repair instructions continuously, separated by time intervals of uniform duration. In some embodiments, however, the presentation module 112 is configured to present one repair instruction, and to present subsequent repair instructions once a user request has been received.

To present maintenance data in a visual format, the presentation module 112 utilizes a display device, such as a pair of augmented reality glasses or a mobile computing device. Visual data is generally presented in the visual field using a translucent overlay of graphical elements, including without limitation: icons, text, schematics or diagrams associated with a target apparatus or surrounding structures, location information, maps and other indications of travel directions and position movement within a visual field, animation or still imagery depicting repair instructions, and indications of emphasis (e.g., highlighting, pointing arrows, and/or flashing). Using a pair of augmented reality glasses, a user views a visual field, along with a translucent overlay produced by the maintenance assistance system 100. The translucent overlay presents graphical elements to depict: (i) interactive maps or other indicia of travel to direct a user to a target apparatus; (ii) repair instructions in a text-based format, along with diagrams of the target apparatus and surrounding structures, wherein particular areas are highlighted or emphasized during presentation of an applicable repair instruction; (iii) animated imagery, showing a process for performing a particular task or repair instruction; and (iv) other text-based or visual representations of reference information associated with the target apparatus or the particular repair.

Alternatively or in combination with the display device, the presentation module 112 is further configured to provide maintenance data to the user via an audio device such as an earpiece, earbuds, headphones, or other form of speaker. In certain embodiments, the presentation module 112 presents auditory instructions according to a time interval schedule. In other embodiments, the presentation module 112 presents auditory instructions individually, each in response to a request from a user, wherein the user request indicates that the user is prepared to move on to the next step in the repair process.

In practice, the data acquisition module 106, the visual field analysis module 108, the user input module 110, and the presentation module 112 may be implemented with (or cooperate with) the processor architecture 102 to perform at least some of the functions and operations described in more detail herein. In this regard, the data acquisition module 106, the visual field analysis module 108, the user input module 110, and the presentation module 112 may be realized as suitably written processing logic, application program code, or the like.

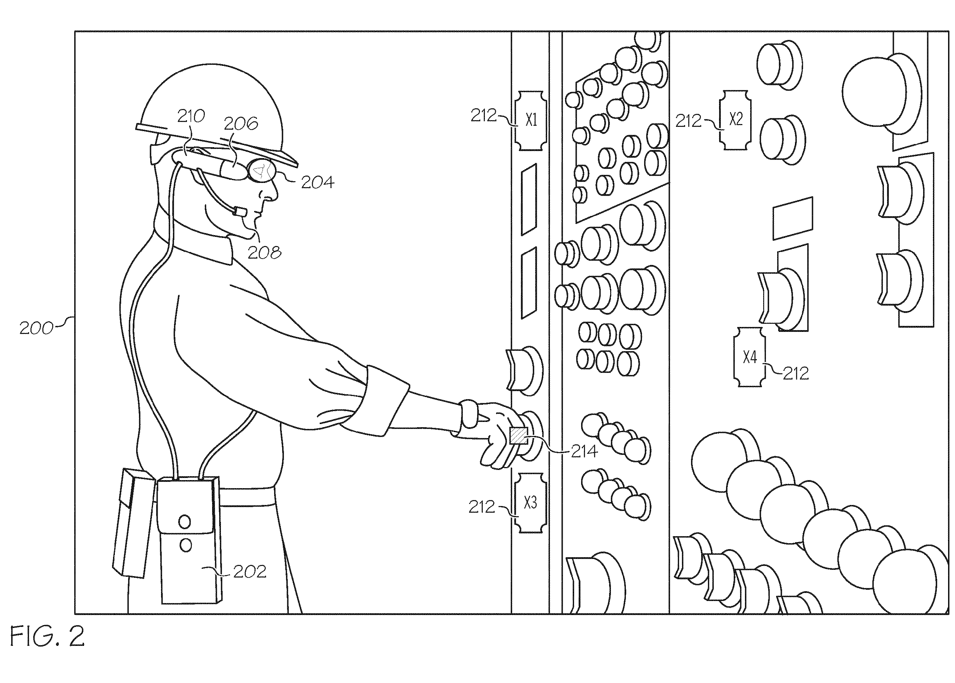

FIG. 2 is a diagram representation of a maintenance assistance system 200, according to some embodiments. It should be appreciated that the maintenance assistance system 200 is one embodiment of the maintenance assistance system 100 described with regard to FIG. 1. In this regard, FIG. 2 shows certain elements and components of the maintenance assistance system of FIG. 1 in more detail. As shown, the maintenance assistance system 200 includes a mobile computing device 202, a display device 204, a camera 206, a microphone 208, an earpiece 210, at least one macrolocation indicator 212, and a microlocation indicator 214.

The mobile computing device 202 will generally be implemented using a portable computer that is lightweight, such that it may be carried by a user in a hands-free manner. The mobile computing device 202 requires a processor, memory, and input/output (I/O) connectivity. The mobile computing device 202 may be stored in, or attached to, something worn by a user, such as a detachable strap, a backpack, a waistpack, or a satchel. In this regard, the mobile computing device 202 may be accessed by the user without occupying the user's hands, allowing the user to freely use his hands for maintenance and repair activities.

In certain embodiments, the display device 204 may comprise a set of glasses or goggles configured to allow a user to view his surroundings, and to present a translucent overlay of applicable graphical elements over the surroundings (i.e., a maintenance assistance display). In other embodiments, the display device 204 may comprise a visor display attached to a helmet, hardhat, or other headgear appropriate for use in maintenance applications, wherein a user can see through the visor display to view his surroundings, and wherein the visor display is configured to present a translucent overlay of graphical elements. In some embodiments, the display device 204 may include a mobile computing display, such as that found on a tablet computer or smartphone, configured to present the visual field captured by the camera 206 and a plurality of translucent graphical elements, superimposed on the visual field. Here, the display device 204 may be used by a second person who wishes to view the visual field and maintenance assistance display of a first person. In other embodiments, the display device 204 comprising a mobile computing display may be used instead of the set of glasses or a visor with specialized capabilities, and may include a wearable mobile computing display. Wearable mobile computing displays may include a touchscreen mounted to a user's arm or leg, such as that used by professional athletes as a "playbook".

The camera 206 is also worn by the user, and may be implemented as part of a display device 204 positioned near the user's face. When positioned near the user's face, the camera 206 is capable of capturing an image representing the user's current visual field. The visual field will be analyzed by the mobile computing device 202 to recognize objects and to determine macrolocation data, as it relates to the maintenance site, and microlocation data, as it relates to the position of the target apparatus in the visual field.

The microphone 208 is worn near the mouth of the user, and is configured to receive user input compatible with voice recognition (VR) technology. User input received by the microphone 208 includes requests for the presentation of maintenance data via the display device 204 and/or the earpiece 210. User input received by the microphone 208 may further include requests for identification of a current macrolocation of a user; travel directions for the user to travel from the currently identified macrolocation to the target apparatus; a currently identified microlocation of the microlocation indicator 214 worn on the user's hand; and positioning instructions for the user to move his hand from the currently identified microlocation to make contact with the target apparatus.

The earpiece 210 is worn by the user and provides a hands-free device for the maintenance assistance system 200 to provide auditory maintenance data to the user. The earpiece 210 is configured to present any maintenance data that may be provided to the user in an auditory form, such as a spoken set of repair instructions, clarifying data associated with the repair instructions, additional reference material associated with the target apparatus or the particular repair, or a confirmation that certain user input has been received by the maintenance assistance system 200.

The macrolocation indicator 212 shown is a passive tag, configured for recognition by the maintenance assistance system 200 when scanned and recognized in an image captured by the camera 206. A passive tag may be implemented using any visually distinguishable marker, configured for recognition by an image processing system. An example of a passive tag may be a label that is color-coded, numerically coded, bar-coded (e.g., a QR tag or UPC bar code), or is otherwise identifiable using one or more discernible features. As shown, when the user walks into the area, the camera 206 receives an image of a defined visual field. In the defined visual field, at least one passive tag is arranged. When an image is captured, the maintenance assistance system 200 scans the image and recognizes at least one passive tag in the image. Here, passive tags labeled X1, X2, X3, and X4 are shown. The maintenance assistance system 200 is configured to recognize the four passive tags, and to interpret a macrolocation based on the recognized passive tags. Macrolocation data interpreted by the system may include GPS coordinates, the name of a hallway, building, or other structure, or the like. In this example, the four passive tags indicate a particular location at the maintenance site, and information coordinating the four passive tags with an associated location is stored in memory of the maintenance assistance system 200. The maintenance assistance system 200 simply scans the visual field, recognizes the four passive tags, and performs a lookup to determine the macrolocation data associated with that group of passive tags. From the macrolocation data, the maintenance assistance system 200 can provide travel directions to the user, for appropriate movement toward the target apparatus.

As shown, the microlocation indicator 214 is worn by the user. In the embodiment shown, the user wears a glove bearing the microlocation indicator 214, which is configured for recognition by the maintenance assistance system 200 when scanned and recognized in an image captured by the camera. Here, when the user walks into the area, the camera 206 captures an image of a defined visual field. When an image is captured, if the user has positioned his gloved hand to be visible in the visual field of the camera 206, the maintenance assistance system 200 scans the image and recognizes microlocation indicator 214 in the image. The maintenance assistance system 200 is configured to interpret a position of the microlocation indicator 214 in the visual field, and to provide movement instructions for positioning the microlocation indicator 214 at the target apparatus, or in other words, to locate the target apparatus.

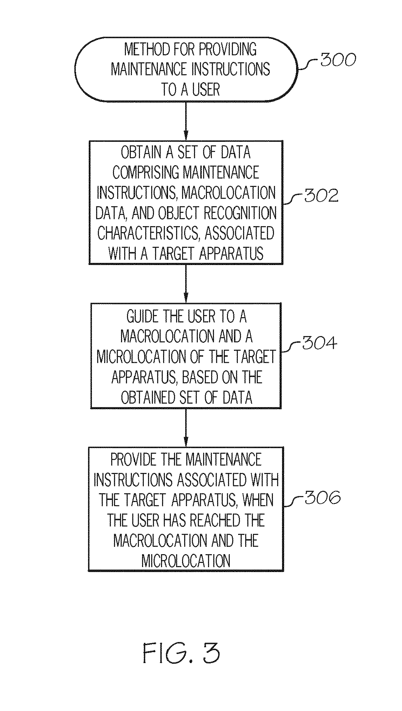

FIG. 3 is a flow chart that illustrates an embodiment of a process 300 for providing maintenance instructions to a user. The various tasks performed in connection with process 300 may be performed by software, hardware, firmware, or any combination thereof. For illustrative purposes, the following description of process 300 may refer to elements mentioned above in connection with FIGS. 1-2. In practice, portions of process 300 may be performed by different elements of the described system. It should be appreciated that process 300 may include any number of additional or alternative tasks, the tasks shown in FIG. 3 need not be performed in the illustrated order, and process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

First, the process 300 obtains a set of data comprising maintenance and/or repair instructions, macrolocation data, and object recognition characteristics, associated with a target apparatus (step 302). A target apparatus may be any device, tool, mechanism, machine, or piece of equipment for which maintenance and/or repair may be required. Generally, a work order or other request for a maintenance or repair task has been received by maintenance personnel, requiring the personnel to acquire appropriate repair instructions, reference material, and applicable location and position information, for performance of the maintenance task. The process 300 initiates the synchronization and download of all information that a user may require in order to complete a particular maintenance task. The information is downloaded into a wearable mobile computing system, to keep the user's hands free to perform repair/maintenance activities.

Next, the process 300 guides the user to a macrolocation and a microlocation of the target apparatus, based on the obtained set of data (step 304). Location data associated with the target apparatus is obtained with the set of maintenance data, which includes macrolocation data, or in other words, a triangulated position of the target apparatus in a geographic area. The process 300 utilizes the macrolocation data associated with the target apparatus and current macrolocation data associated with the user to provide the user with traveling directions for the user to follow to arrive at the location of the target apparatus. The process 300 determines microlocation data for the user and for the target apparatus when the user is present in the visual field of the target apparatus. Microlocation data is a position in the visual field, relative to other recognized objects in the visual field. The process 300 utilizes the microlocation data associated with the target apparatus and current microlocation data associated with the user to provide the user with positioning and movement instructions for the user to follow to make contact with the target apparatus.

The process 300 then provides the maintenance instructions associated with the target apparatus, when the user has reached the macrolocation and the microlocation (step 306). In certain embodiments, the user may request the maintenance instructions when ready to begin work on the target apparatus. In some embodiments, the process 300 may recognize the macrolocation, microlocation, or both the macrolocation and microlocation of the user, and present instructions automatically when the user has arrived at the appropriate geographic location and position in the visual field.

The maintenance instructions may be presented step-by-step, allowing the user time between steps to request a repeated instruction, clarifying details for a particular instruction, supplemental reference material, or to reply that a particular instruction has been completed. In certain embodiments, the process 300 performs a checklist function, requesting feedback from the user and designating steps or tasks associated with a repair (or maintenance activity) as complete when the user input indicates this is the case. For example, the process 300 maintains a list of tasks, or maintenance instructions, associated with a particular work order and target apparatus. The process 300 may present each task to the user, in order of performance, to request a response regarding the status of the task. The process 300 receives the requested response in the form of voice data from the user, indicating whether the presented task is complete. The process 300 then designates the task or maintenance instruction as complete, maintaining an internal checklist for documentation purposes. Alternatively, or in combination with the "checklist" functionality, the process 300 may request user responses in order to provide adaptive instructions that are based on user input. In certain embodiments, the process 300 may request status data associated with a target apparatus, and then determine and present the next instruction based on the status data provided by the user. For example, the process 300 may provide the instruction for a user to measure voltage, and the user may respond by articulating a particular number of volts, such as 5V. The process 300 then determines and presents the next instruction that is appropriate, based on the 5V reading.

The process 300 may present maintenance instructions and other applicable material to a user as auditory instructions via a wearable audio device and as visual instructions via a display device. In certain embodiments, the process 300 may present instructions via a single, wearable user device comprising an audio device and a display device. Visual instructions may be presented as a transparent overlay to a visual field of the user, to include text-based instructions, graphical elements, or both. For example, upon arrival at the target apparatus, a user may request instructions, and in response, the process 300 provides the first step or maintenance instruction as an auditory communication. In certain embodiments, the process 300 simultaneously provides visual instructions, including a translucent visual overlay of graphical elements depicting and emphasizing the target apparatus. In some embodiments, animation of the graphical elements is provided, to illustrate a simulation of the repair or maintenance activity. In some embodiments, still imagery depicting the target apparatus and surrounding structures is presented, with emphasis placed on a part or structure at the time that the auditory instruction is given to the user.

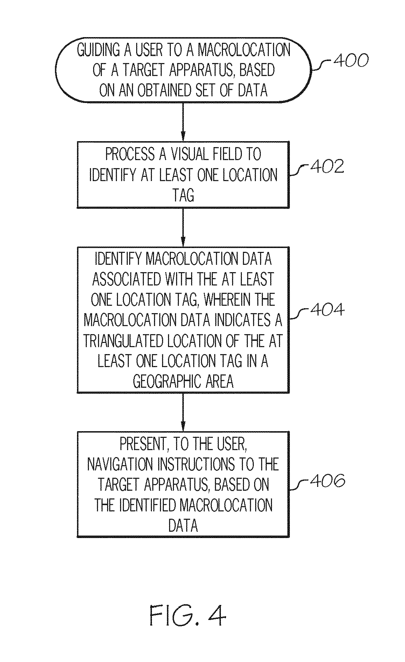

FIG. 4 is a flow chart that illustrates an embodiment of a process 400 for guiding a user to a macrolocation of a target apparatus. It should be appreciated that the process 400 described in FIG. 4 represents one embodiment of step 304 described above in the discussion of FIG. 3, including additional detail. First, the process 400 uses object recognition techniques that are well-known in the art to analyze a visual field to identify at least one location tag (step 402). Generally, the process 400 uses basic pattern matching techniques, wherein the image is processed and any location tag present in the visual field is identified.

Next, the process 400 identifies macrolocation data associated with the at least one location tag (step 404). Macrolocation data includes information associated with a triangulated location within a maintenance site. A particular location tag, also called a "passive tag", is placed in a designated area of a maintenance site and, when recognized in a visual field, indicates to the process 400 the macrolocation of the current visual field. Here, once the process 400 has scanned the visual field and recognized any passive tags present in the visual field, the process 400 performs a lookup to determine the macrolocation data associated with the recognized passive tags. In certain embodiments, the macrolocation data is identified using a particular color coding or numerical coding of the passive tag. In some embodiments, the passive tag may be identifiable using a bar code (e.g., a QR tag or UPC bar code). Alternatively, other discernible features may be "matched" to macrolocation data stored in system memory.

The process 400 then presents, to a user, navigation instructions to the target apparatus, based on the identified macrolocation data (step 406). The macrolocation of the target apparatus and detailed information about the maintenance site are known to the process 400, and are stored in an accessible memory structure. Maintenance site data may include maps, diagrams or schematics, and navigation information for the maintenance site. In certain embodiments, the macrolocation of the target apparatus and maintenance site data have been downloaded with other maintenance data. The process 400 has determined the macrolocation of the user, by identifying the macrolocation data associated with the location tag recognized in the current visual field (step 404).

Using the macrolocation of the user, the macrolocation of the target apparatus, and detailed information associated with the maintenance site, the process 400 plots a route from the macrolocation of the user to the macrolocation of the target apparatus. In certain embodiments, these travel directions may include turn-by-turn directions (e.g., "turn left into the next hallway, then walk ten feet and turn right") or more general and high-level directions (e.g., "go to the northeast corner of the building"). Travel directions may be provided as auditory instructions, visual instructions, or a combination of both. When providing visual instructions, the process 400 may present a text-based representation of directions and/or graphical elements depicting the route on a map or diagram. The process 400 may also utilize graphical elements to emphasize portions of the represented route, to include highlighting, flashing, coloring/shading, pointing arrows, animated imagery, or the like.

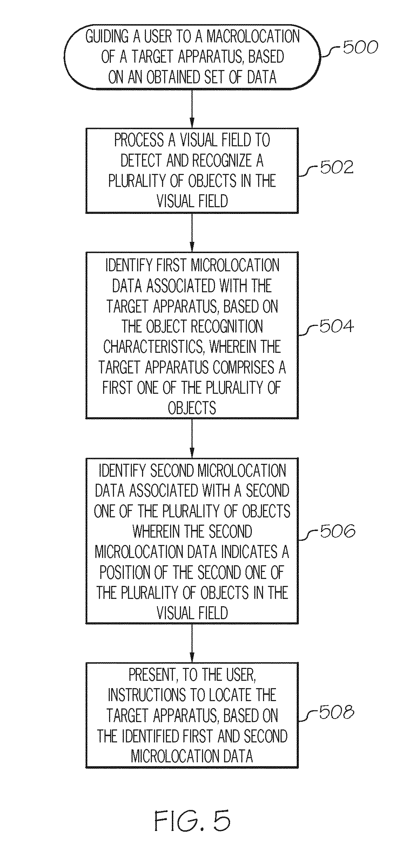

FIG. 5 is a flow chart that illustrates an embodiment of a process 500 for guiding a user to a microlocation of a target apparatus. It should be appreciated that the process 500 described in FIG. 5 represents one embodiment of step 304 described above in the discussion of FIG. 3, including additional detail. First, the process 500 uses object recognition techniques that are well-known in the art to analyze a visual field to identify a plurality of objects in the visual field (step 502). The process 500 then identifies first microlocation data associated with the target apparatus, based on predefined object recognition characteristics, wherein the target apparatus comprises a first one of the plurality of objects (step 504). Predefined object recognition characteristics are known to the process 500 and are stored in an accessible memory structure. In certain embodiments, the object recognition characteristics of the target apparatus have been downloaded with other maintenance data. Here, the process 500 locates the target apparatus in the visual field, and then determines the exact position of the target apparatus (i.e., the microlocation of the target apparatus).

Next, the process 500 identifies second microlocation data associated with a second one of the plurality of objects, wherein the second microlocation data indicates a position of the second one of the plurality of objects in the visual field (step 506). A recognized object in the visual field is used by the process 500 as a microlocation indicator, or in other words, an indicator of a detected position in a visual field, as it relates to other recognized objects in the visual field. In certain embodiments, a microlocation indicator may comprise a tag worn on the hand of a user, to indicate the microlocation of a user in a visual field. A hand-tag may be part of a glove, bracelet or wristband, ring, or other wearable indicator. In some embodiments, the microlocation indicator may be any recognized object in the visual field, wherein the recognized object indicates its own position in a visual field (i.e., microlocation).

The process 500 then presents, to a user, instructions to locate the target apparatus, based on the identified microlocation data (step 508). These movement or positioning instructions are directions that a user may follow to move, within a visual field, to make contact with the target apparatus. The process 500 first interprets a position of the microlocation indicator in the visual field (step 504), and then provides movement instructions from the microlocation indicator to the target apparatus. In embodiments where the microlocation indicator is worn on the user's hand, the process 500 provides instructions for the hand to move to make contact with the target apparatus (e.g., "move your hand six inches to the left"). In embodiments where the microlocation indicator is another recognized object in the visual field, the process 500 provides movement instructions that relate to the position of the object (e.g., "locate a position six inches to the left of the recognized object").

Positioning or movement instructions may be provided as auditory instructions, visual instructions, or a combination of both. When providing visual instructions, the process 500 may present a translucent overlay to the visual field. The translucent overlay may include a text-based representation of directions and/or graphical elements depicting an exemplary movement on diagram of the visual field. The process 500 may also utilize graphical elements to emphasize one or more movement instructions, to include highlighting, flashing, coloring/shading, pointing arrows, animated imagery, or the like.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, or a radio frequency (RF) link. The computer data signal may include any signal that can propagate over a transmission medium such as electronic network channels, optical fibers, air, electromagnetic paths, or RF links. The code segments may be downloaded via computer networks such as the Internet, an intranet, or a LAN.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for providing maintenance instructions to a user, the method comprising:
obtaining a set of data, comprising maintenance instructions, macrolocation data, and object recognition characteristics associated with a target apparatus;
guiding the user to a macrolocation and a microlocation of the target apparatus, based on the obtained set of data; and
providing the maintenance instructions associated with the target apparatus, when the user has reached the macrolocation and the microlocation.

2. The method of Claim 1, wherein the providing step further comprises:
presenting the maintenance instructions as a text-based, translucent visual overlay using a wearable user device.

3. The method of Claim 1, wherein the providing step further comprises:
presenting the maintenance instructions in the form of audio instructions using a wearable user device.

4. The method of Claim 1, wherein the obtaining step further comprises:
downloading the set of data from a base station, wherein the base station comprises a stored database of information for a plurality of target apparatuses.

5. The method of Claim 1, wherein the guiding step further comprises:
processing a visual field to detect and recognize a plurality of objects in the visual field;
identifying first microlocation data associated with the target apparatus, based on the objection recognition characteristics, wherein the target apparatus comprises a first one of the plurality of objects;
identifying second microlocation data associated with a second one of the plurality of objects, wherein the second microlocation data indicates a position of the second one of the plurality of objects in the visual field; and
presenting, to the user, instructions to locate the target apparatus, based on the first microlocation data and the second microlocation data.

6. The method of Claim 1, wherein the guiding step further comprises:
processing a visual field to detect and analyze a location tag;
identifying second macrolocation data associated with the location tag, wherein the second macrolocation data indicates a triangulated location of the location tag in a geographic area; and
presenting, to the user, navigation instructions to the target apparatus, based on the macrolocation data and the second macrolocation data.

7. The method of Claim 1, wherein the guiding step further comprises:
processing a visual field to:
detect a wearable indicator in the visual field; and
recognize a plurality of objects in the visual field, wherein the plurality of objects comprises at least the target apparatus;
identifying first microlocation data associated with the target apparatus, based on the object recognition characteristics;
identifying second microlocation data associated with the wearable indicator, wherein the second microlocation data indicates a position of the wearable indicator in the visual field; and
presenting, to the user, instructions to locate the target apparatus, based on the first microlocation data and the second microlocation data.

8. The method of Claim 1, further comprising:
providing a subset of the maintenance instructions for the target apparatus;
in response to the provided subset, receiving a request for clarifying data for the subset of the maintenance instructions, wherein the set of data further comprises the clarifying data; and
presenting the clarifying data, based on the received request;
wherein the clarifying data comprises graphical elements presented as a translucent visual overlay to a visual field.

9. The method of Claim 1, further comprising:
providing a first subset of the maintenance instructions for the target apparatus, wherein the subset comprises an instruction for the user to acquire a set of status data;
receiving the set of status data, in response to the provided subset; and
providing a second subset of the maintenance instructions, based on the received set of status data.

10. The method of Claim 1, further comprising:
maintaining a list of tasks associated with the set of data;
presenting one of the list of tasks to the user to request a response;
receiving voice data from the user, wherein the voice data comprises the requested response indicating that the one of the list of tasks is complete; and
designating the one of the list of tasks as complete.

11. A wearable device for providing user instruction, the wearable device comprising:
a memory element, configured to store maintenance data for a target apparatus, wherein the maintenance data comprises at least a plurality of repair instructions and a macrolocation of the target apparatus;
a voice recognition (VR) interface, configured to receive voice instructions from a user and to retrieve the maintenance data for presentation to the user in response to the received voice instructions;
a visual input device, configured to scan a visual field of the user, to determine a macrolocation of the user;
a processor, configured to determine traveling directions for the user, based on the macrolocation of the user and the macrolocation of the target apparatus; and
a presentation apparatus, configured to present the maintenance data and the traveling directions to the user.

12. The wearable apparatus of Claim 11, wherein the visual input device is further configured to:
identify a first microlocation of the target apparatus, wherein the first microlocation indicates a position of the target apparatus in the visual field; and
identify a second microlocation of a wearable microlocation indicator, wherein the second microlocation indicates a position of the wearable microlocation indicator in the visual field;
wherein the processor is further configured to determine movement instructions for the user to locate the target apparatus in the visual field, based on the identified first microlocation data and the identified second microlocation data; and
wherein the presentation apparatus is further configured to present the movement instructions to the user.

13. The wearable apparatus of Claim 11, wherein the presentation apparatus is further configured to:
present visual indications of the apparatus data, the traveling directions, and the movement instructions, via a translucent overlay to the visual field; and
present auditory indications of the apparatus data, the traveling directions, and the movement instructions, via a wearable user earpiece.
